# EUROPEAN PATENT SPECIFICATION

(11) **EP 1 212 947 B1**
(45) Date of publication and mention of the grant of the patent: **06.06.2007**
(21) Application number: 01309241.6
(22) Date of filing: 31.10.2001
(51) Int. Cl.: A23G 9/32, A23G 9/20, A23G 9/04

(54) **Aerated compositions, process and apparatus for achieving such aerated compositions**
Aufgeschäumte Zusammensetzung, Verfahren und Vorrichtung zu deren Herstellung
Composition aerée, procédé et appareillage pour l'optention

(30) Priority: 06.12.2000 EP 00310835
(43) Date of publication of application: 12.06.2002
(73) Proprietor: UNILEVER PLC, London EC4P 4BQ (GB); UNILEVER N.V., 3013 AL Rotterdam (NL)
(72) Inventor: Spindler, Suzanne Mary, Sharnbrook, Bedford, MK44 1LQ (GB); Wix, Loyd, Sharnbrook, Bedford, MK44 1LQ (GB)
(74) Representative: Hugot, Alain

(56) References cited:
- WO-A-00/07457
- US-A- 5 968 582

## Description

The invention relates to aerated food compositions. More particularly the invention relates to aerated ice cream compositions which comprise a fat component having a low melting point and thereby retaining liquid properties at processing temperatures. The invention further relates to a process for preparing such compositions and the use of particular apparatus in said process.

### Background to the invention

It is known to aerate a mix for the preparation of an ice cream through the use of an aerating means comprising a rotating element that fits into the barrel of a continuous ice cream freezer. This aerating means is commonly referred to as a dasher. On rotation the dasher transfers mechanical energy into the mix in order to achieve aeration and generate a fat network by aggregating some of the fat droplets. This aggregation is necessary for product stability.

For many industrial continuous freezers there are a variety of dasher types available. These can be differentiated from each other by the volume displaced within the freezer barrel which can be assessed by simply filling the freezer barrel with a liquid, such as water, and measuring the volume of liquid displaced when the dasher is fitted therein. A dasher described as a series 80 indicates that this rotating element occupies 80% of the available internal volume of the freezer barrel so that only 20% of the space is available to be occupied by the mix to be aerated. By contrast a series 15 dasher, also known in the art, demonstrates a displacement volume of only 15% of the internal barrel volume, the remaining 85% being available to be occupied by a mix to be aerated.

In conventional ice cream processing it is generally accepted that higher displacement dashers such as the series 80 give rise to high quality ice cream being highly churned (Ice Cream 5^{th} Edition, W.S. Arbuckle et al., page 183) thus showing optimal levels of fat de-stabilisation, while at the same time product dryness, good meltdown resistance and product hardness. These displacement dashers are therefore the standard form of aerating means used in ice cream manufacture.

The ice cream formulations prepared by conventional aeration comprise a fat phase with a relatively high melting point. This means that little if any liquid fat is present at the processing temperature.

However, frozen confectionary products comprising substantial amounts of low melting fats are known from US-5968582 and WO-00/07457.

The applicants have identified a need to extend the range of fats that can be applied to ice cream manufacture. In particular there is a need for the development of novel ice cream compositions having formulations that can comprise a fat component with a low melting point, thus imparting a higher level of liquid fat in the fat phase, at the processing temperature. At the same time formulations must maintain the high degree of stable aeration and low levels of destabilised fat and overrun loss, characteristic of conventional ice creams. The ability to use increasingly varied fats would also allow the manufacture of ice cream at reduced cost.

Unexpectedly it has been found that the full range of conventional techniques described above for processing ice cream are not suitable for this group of novel ice cream formulations. The use of high displacement aerating means has been found by the applicants to lead to the development of a product exhibiting over destabilisation of fat and overrun loss, phase separation, leading to a clearly unsatisfactory product.

The technical problem to be solved by the present invention is therefore derived from the finding that novel ice cream formulations comprising a fat phase with relatively high levels of liquid fat at the processing temperature cannot be processed to a high quality ice cream by conventional routes.

It has been surprisingly been found that a solution to this problem resides in the use of equipment which had never been used for this type of formulation before. There is no suggestion in the prior art that this type of equipment has any positive influence on the destabilisation of fat, phase separation or overrun loss during the processing of a composition. The present invention therefore seeks to provide a stable composition with at least 90% overrun, wherein said composition comprises a fat phase which has a high ratio of liquid fat to solid fat.

### Tests and definitions

Levels of liquid fat can be determined by ¹³C-NMR spectroscopy wherein the liquid fat level of an emulsion of an ice cream mix of the invention is determined.

Measurements carried out at -5 & +50°C for 100% fully liquid state. ¹³C-NMR is carried out on a Bruker AMX-400 high resolution NMR spectrometer, with 10mm sample tubes. Data is acquired with inverse gated proton de-coupling and suitable interscan delay to ensure quantitative results. Volume of samples for 100% liquid measurement was reduced to keep total sample within probe coils and hence negate any complications due to premix separation. Measurements at -5°C are carried out after external equilibration for at least 2hrs. 100% liquid measurements are carried out after at least 30min equilibration, at +50°C, in spectrometer probe. All temperatures were verified using external thermocouple meter. Liquid fat content is determined by integration of fat signals (15-40ppm), relative to integral of sugar signals (60-85ppm). At -5°C and above the integral of sugar signals will remain constant and hence can be used as an internal standard. The proportion of liquid fat at the chosen temperature is calculated by comparison of integrals with those from fat signals from the 100% "melted" sample.

For the purpose of the invention overrun can be determined as described in Ice Cream 4^{th} Edition, Arbuckle et al. page 181.

### Brief description of the invention

In the light of conventional teachings that an aerating means that displaces 80% of the freezer barrel volume is most suited to giving the best quality ice cream in terms of optimal fat de-emulsification, product dryness, good meltdown resistance and product hardness; it is unexpected to find that compositions suitable for the invention cannot be processed to an ice cream by this route.

It has been found that the use of a high displacement aerating means will lead to unacceptable levels of destabilised fat in the formulations of the invention due to the reduced residence time of the mix in the freezer barrel

It is an object of the invention to provide a process for the preparation of a composition, wherein said process comprises aerating a mix comprising a fat phase, in a freezer barrel enclosing an internal volume, said internal volume comprising an aeration means, wherein said aeration means displaces less than or equal to 40% of said internal volume, characterised in that at least 50% weight by weight of said fat phase is liquid at -5°C.

By way of the present invention a process has been devised as described above wherein a selected displacement range for the aerating means of less than 40% of the internal freezer barrel volume, has been found to yield a stable aerated ice cream demonstrating good properties. These properties include low fat de-emulsification, product dryness, good meltdown resistance and product hardness for the novel compositions provided herein.

Through the use of an aerating means that displaces less than 40% of internal freezer barrel volume it has been possible to achieve aeration levels in excess of 90% overrun for a mix having at least 50% w/w of its fat phase in a liquid state at -5°C.

It is preferred that the aerating means used for the purpose of the invention displaces at least 10% of the internal barrel volume, more preferably at least 15%, most preferably the aerating means displaces from 15 to 30% of the internal freezer barrel volume. Suitable aeration means are commercially available from the manufacturer WCB.

A composition which in the invention may comprise a fat phase derived from any fat source having a low melting point, defined by a proportion of at least 50% w/w liquid fat at -5°C. Preferably the proportion of the fat phase that is liquid at - 5°C is less than 55%w/w of the phase when in an emulsified state. Preferably the fat phase comprises one or more fats selected from the group comprising soy bean oil, palm oil, walnut oil, pistachio oil, hazelnut oil, hydrogenated or partially hydrogenated sunflower oil.

The total fat content of the composition may range from 3 %w/w to 15 %w/w, preferably 5 to 10 %w/w. Most preferred the fat content of a composition according to the invention is about 8 %w/w.

Preferably compositions of the invention have an overrun of at least 100%, more preferably the level of overrun is at least 110%. In a particularly preferred embodiment a composition according to the invention is an ice cream.

The ice cream compositions as described above may subsequently undergo storage in a standard freezer at - 18°C.

It is recognised that as the proportion of liquid fat in the fat phase increases it becomes more preferable to choose a aerating means towards the lower end of the displacement range. This increases the residence time of the mix in the freezer barrel and thereby allows a longer and more effective aeration period without destabilisation of the fat.

A second object of the invention provides for the use of a aerating means that displaces less than 40% of a freezer barrel internal volume in the aeration of a composition comprising a fat phase and having an overrun of at least 90%, characterised in that at least 50% weight by weight of said fat phase is liquid at -5°C.

### Detailed Description

### Example 1

500 kg of an ice cream mix A was prepared with the composition indicated in table 1. The mix was made in a large scale mix plant at a temperature of approximately 65-70°C, wherein the order of ingredients into the tank was water, skimmed milk powder, sugars and stabilisers/emulsifier compounds (suitably Cremodan™ SE 019 available from Danisco™ ingredients) and fats/oils. MD40 is a refined and spray dried glucose syrup in powder form having 40% dextrose equivalent and is sold as Cerestar™ or Morsweet™. The mix was homogenised at 1.379 x 10⁷ Nm⁻² i.e. 138 Bar (2000psi) and then pasteurised at 83°C for 15 seconds. Following pasteurisation the mixture was immediately chilled to approximately 4°C and aged in a ageing tank for at least 2 hours.

According to the methodology described above the level of liquid fat at the processing temperature of -5°C was 53 w/w of the fat phase.

**Table 1 : Mix A**

| Ingredient | Weight % |
|---|---|
| Sucrose | 13.61 |
| Walnut oil | 2.86 |
| Skimmed milk powder | 10.08 |
| MD40 | 4.05 |
| Butter fat | 5.14 |
| Cremodan SE 019 | 0.45 |
| Water | 63.81 |

Mixes prepared as described and according to the above formulation were separately processed through freezer barrels comprising an aerating means of 15, 30 and 80% displacement of the internal volume of the barrel.

It was found that with an aerating means of 15% or 30% displacement mix A could be processed to a composition having an overrun of at least 90%. On hardening in a standard freezer at -18°C this composition gave rise to an ice cream with good organoleptic properties showing a creamy texture with little or no ice and no phase separation or unacceptable level of fat destabilisation.

In contrast where mix A was processed to an overrun of 90% by aeration with an aerating means showing 80% displacement of the freezer barrel, the resulting ice cream had very poor oral properties showing a high degree of phase separation and over destabilisation of fat, in addition to a very icy undesirable texture.

## Claims

1. A process for the preparation of a composition, wherein said process comprises aerating a mix comprising a fat phase in a freezer barrel enclosing an internal volume, said internal volume comprising an aeration means, wherein said aeration means displaces less than 40% of said internal volume, **characterised in that** at least 50% w/w of said fat phase is liquid at -5°C.

2. A process according to claim 1, wherein said mix is aerated to an overrun of at least 90%.

3. A process according to either claims 1 or 2 wherein said composition is an ice cream.

4. Use of an aerating means that displaces less than 40% of an internal volume of a freezer barrel in a process for the preparation of a composition, wherein said composition comprises a fat phase and has an overrun of at least 90%, wherein at least 50 % weight by weight of said fat phase is liquid at -5°C.

## Patentansprüche

1. Verfahren für die Herstellung einer Zusammensetzung, worin besagtes Verfahren Belüften eines Gemisches, umfassend eine Fettphase, in einer Gefriertrommel umfasst, welche ein inneres Volumen einschließt, besagtes inneres Volumen ein Belüftungsmittel umfasst, worin besagtes Belüftungsmittel weniger als 40% von besagtem inneren Volumen verdrängt, **dadurch gekennzeichnet, dass** mindestens 50% Gew./Gew. von besagter Fettphase bei -5°C flüssig sind.

2. Verfahren gemäß Anspruch 1, worin besagtes Gemisch zu einem Überlauf von mindestens 90% belüftet wird.

3. Verfahren gemäß einem von Ansprüchen 1 oder 2, worin besagte Zusammensetzung eine Eiscreme ist.

4. Verwendung eines Belüftungsmittels, das weniger als 40% eines inneren Volumens einer Gefriertrommel verdrängt, in einem Verfahren für die Herstellung einer Zusammensetzung, worin besagte Zusammensetzung eine Fettphase umfasst und einen Überlauf von mindestens 90% hat, worin mindestens 50% Gewicht zu Gewicht von besagter Fettphase bei -5°C flüssig sind.

## Revendications

1. Procédé de préparation d'une composition, dans lequel ledit procédé comprend le fait d'aérer un mélange comprenant une phase grasse dans un cylindre de congélation enfermant un volume interne, ledit volume interne comprenant un moyen d'aération, où ledit moyen d'aération déplace moins de 40 % dudit volume interne, **caractérisé en ce qu'**au moins 50 % en poids/poids de ladite phase grasse est liquide à -5°C.

2. Procédé selon la revendication 1, dans lequel ledit mélange est aéré à un foisonnement d'au moins 90 %.

3. Procédé selon la revendication 1 ou la revendication 2, dans lequel ladite composition est une crème glacée.

4. Utilisation d'un moyen d'aération qui déplace moins de 40 % du volume interne d'un cylindre de déplacement, dans le cadre d'un procédé de préparation d'une composition, où ladite composition comprend une phase grasse et a un foisonnement d'au moins 90 %, où au moins 50 % en poids de ladite phase grasse est liquide à -5°C.
